# EUROPÄISCHE PATENTSCHRIFT

(11) **EP 3 724 610 B1**
(45) Veröffentlichungstag und Bekanntmachung des Hinweises auf die Patenterteilung: **03.01.2024**
(21) Anmeldenummer: 18803652.9
(22) Anmeldetag: 14.11.2018
(51) Int. Cl.: G01F 1/60, G01F 1/58

(54) **VERFAHREN ZUM BETREIBEN EINES MAGNETISCH-INDUKTIVEN DURCHFLUSSMESSGERÄTS UND MAGNETISCH-INDUKTIVES DURCHFLUSSMESSGERÄT**
METHOD FOR OPERATING A MAGNETIC-INDUCTIVE FLOWMETER AND MAGNETIC-INDUCTIVE FLOWMETER
PROCÉDÉ DE FONCTIONNEMENT D'UN DÉBITMÈTRE MAGNÉTIQUE-INDUCTIF ET DÉBITMÈTRE MAGNÉTIQUE-INDUCTIF

(30) Priorität: 14.12.2017 DE 102017129980
(43) Veröffentlichungstag der Anmeldung: 21.10.2020
(73) Patentinhaber: Endress+Hauser Flowtec AG, 4153 Reinach (CH); Friedrich-Alexander-Universität Erlangen-Nürnberg, 91054 Erlangen (DE)
(72) Erfinder: LINNERT, Michael, 90513 Zirndorf (DE); MARIAGER, Simon, 4059 Basel (CH)
(74) Vertreter: Penner, Paul
(86) Internationale Anmeldenummer: PCT/EP2018/081141
(87) Internationale Veröffentlichungsnummer: WO 2019/115115

(56) Entgegenhaltungen:
- EP-A2- 1 275 940
- WO-A1-2018/114189
- DE-A1- 10 329 540
- US-A- 4 422 337
- US-A- 4 597 295

## Beschreibung

Die Erfindung betrifft ein energiesparendes Verfahren zum Betreiben eines magnetisch-induktiven Durchflussmessgeräts zur Messung einer Strömungsgeschwindigkeit bzw. eines Volumendurchflusses eines durch ein Messrohr des Durchflussmessgeräts fließenden Mediums sowie ein solches Durchflussmessgerät.

Magnetisch-induktive Durchflussmessgeräte machen sich zu Nutze, dass Magnetfelder elektrisch geladene Teilchen, welche eine Geschwindigkeitskomponente senkrecht zum Magnetfeld aufweisen, senkrecht zum Magnetfeld ablenken, wobei die Richtung der Ablenkung vom Vorzeichen der Ladung abhängig ist.

In einem durch ein Messrohr eines magnetisch-induktiven Durchflussmessgeräts fließendes elektrisch leitfähiges Medium wird durch ein senkrecht zu einer Messrohrachse verlaufendes Magnetfeld eine elektrische Messspannung induziert, welche mittels Messelektroden abgreifbar und für eine Durchflussmessung auswertbar ist.

Im Idealfall ist die durch die Messelektroden abgegriffene Spannung proportional zur Stärke des Magnetfelds sowie proportional zum Durchfluss des Mediums durch das Messrohr. Jedoch verursachen elektrochemische Effekte beispielsweise an einer Oberfläche Medium-Messelektrode Störpotentiale, welche zeitlich veränderlich sind und eine Durchflussmessung verfälschen.

Diesem Manko wird beispielsweise dadurch entgegengetreten, dass Messphasen eingerichtet werden, in welchem das Medium mit zeitlich konstantem Magnetfeld beaufschlagt wird, wobei Messphasen von Wechselphasen unterbrochen werden, welche zum Wechseln der Feldstärke und gegebenenfalls der Richtung des Magnetfelds eingerichtet sind. Durch Abgreifen von Messspannungen aus verschiedenen Messphasen und Differenzbildung lässt sich der Einfluss der Störpotentiale und somit korrigierte Durchflussmesswerte bestimmen. Dadurch muss für jede Durchflussmessung und für jede Störspannungsbestimmung das Magnetfeld geändert werden.

Eine andere Vorgehensweise zur Bestimmung und Korrektur der Störspannung schlägt beispielsweise die WO2015043746A1 vor, wobei der technische Hintergrund energiesparende magnetisch-induktive Durchflussmessgeräte mit geringer Schaltfrequenz sind. Hierbei wird von einem ersten Magnetfeld mit einer ersten Magnetfeldstärke ein zweites Magnetfeld mit einer zweiten Magnetfeldstärke und ein direkt anschließendes drittes Magnetfeld mit einer dritten Magnetfeldstärke einzurichten, wobei beim ersten und zweiten Magnetfeld genau ein Messwert einer Messspannung bestimmt werden, wobei beim dritten Magnetfeld zwei weitere Messwerte der Messspannungen bestimmt werden, wobei erst mit der vierten Messspannung eine mittels einer bestimmten Störspannung korrigierte Durchflussmessung erhalten wird.

Nachteilhaft an dieser Lösung ist die lange Phase während der zwei ersten Magnetfelder, bei welcher keine Durchflussmessung durchgeführt wird.

Die US4422337A und DE3132471A1 offenbaren ein Verfahren zur Kompensation eines Gleichspannungsanteils bei einem magnetisch-induktiven Durchflussmessgerät.

Die US4597295A beschreibt ein magnetisch-induktives Durchflussmessgerät, bei welchem zwischen Speisephasen Ruhephasen ohne Magnetfeld eingerichtet werden.

Die EP1275940A2 beschreibt ein Verfahren zum Betreiben eines magnetisch-induktiven Durchflussmessgeräts, wobei ein Fehlersignal erzeugt wird, wenn in einer zu messenden Flüssigkeit eine gleichmäßige Turbulenz gestört wird.

Die nach Prioritätstag veröffentlichte WO2018114189A1 beschreibt ein Verfahren zum Betreiben eines magnetisch-induktiven Durchflussmessgeräts, bei welchem ein durch Magnetfeldwechsel erzeugter Spannungspuls bemessen und basierend darauf eine Störung einer Elektrodenspannung während einer Speisephase ermittelt wird.

Die DE 103 29 540 A1 offenbart ein Verfahren zum Betreiben eines magnetisch-induktiven Durchflussmessgerätes, bei dem Störpotentiale, die durch Fremdstoff-Partikel bzw. Luftbläschen erzeugt sind, kompensiert werden. Dazu werden die hinterlegten digitalen Datensätze nach pulsförmigen Anomalien im zeitlichen Verlauf des Messsignales durchsucht und entfernt. Um die Störpotentiale auflösen zu können, ist jedoch eine hohe Auflösung notwendig, was zu einem höheren Energieverbrauch führt.

Aufgabe ist es daher, ein Verfahren zum Betreiben eines magnetisch-induktiven Durchflussmessgeräts sowie ein magnetisch-induktives Durchflussmessgerät vorzuschlagen, so dass zum Betreiben des Durchflussmessgeräts wenig Energie notwendig ist und mehr Messzeit zur Verfügung steht.

Die Aufgabe wird gelöst durch ein Verfahren gemäß dem unabhängigen Anspruch 1 sowie durch ein magnetisch-induktives Durchflussmessgerät gemäß dem unabhängigen Anspruch 14.

Bei einem erfindungsgemäßen Verfahren zum Betreiben eines magnetisch-induktiven Durchflussmessgeräts zum Messen des Volumendurchflusses oder der Durchflussgeschwindigkeit eines durch ein Messrohr des Durchflussmessgeräts strömenden Mediums,
wird ein Magnetsystem das Medium im Messrohr mit einem senkrecht zu einer Messrohrachse stehenden Magnetfeld beaufschlagt,
wobei ein Magnetfeldverlauf Konstantphasen K mit zeitlich konstantem Magnetfeld und Wechselphasen W mit zeitlich veränderlichem Magnetfeld aufweist,
wobei die Wechselphasen dazu eingerichtet sind, von einer ersten Konstantphase mit einem ersten Magnetfeld in eine anschließende zweite Konstantphase mit einem zweiten Magnetfeld zu wechseln,
wobei das zweite Magnetfeld ungleich dem ersten Magnetfeld ist;
wobei mittels mindestens einem Paar Messelektroden umfassend eine erste Messelektrode und eine zweite Messelektrode eine im Medium induzierte, durchflussabhängige elektrische Rohmessspannung R(t) abgegriffen wird;
wobei eine elektronische Mess-/Betriebsschaltung mit den Messelektroden elektrisch verbunden ist, welche die Rohmessspannung auswertet und Durchflussmesswerte ermittelt,
wobei während jeder Konstantphase eine Mehrzahl Rohmesswerte RM(t) der Rohmessspannung bestimmt werden, wobei sich die Rohmessspannung R aus einem durchflussabhängigen Anteil D, einem Störanteil S und einem Rauschanteil zusammensetzt,
wobei aus jedem Rohmesswert RM(t) ein erster Durchflussmesswert D1 und ein erster Störspannungswert S1 berechnet wird,
wobei ein Rohmesswert einer vorangehenden ersten Konstantphase und ein Rohmesswert einer an die erste Konstantphase anschließende zweite Konstantphase zur Berechnung eines zweiten Durchflussmesswerts sowie eines zweiten Störspannungswerts Sb des Störanteils S herangezogen werden,
wobei erste Durchflussmesswerte der ersten Konstantphase und/oder der zweiten Konstantphase mittels der Kenntnis des zweiten Durchflussmesswerts und des berechneten zweiten Störspannungswerts angepasst werden,
dadurch gekennzeichnet, dass auf Basis eines ersten Durchflussmesswerts ein anschließender Prognosewert des Durchflusses vorhergesagt, und wobei auf Basis eines ersten Störspannungswerts ein anschließender Prognosewert des Störanteils vorhergesagt wird,
wobei ein weiterer Rohmesswert gemessen wird,
wobei ein erster Durchflussmesswert mittels des Prognosewerts des Durchflusses und mittels des Weiteren Rohmesswerts berechnet wird, und wobei ein erster Störspannungswert mittels des Prognosewerts der Störspannung und mittels des weiteren Rohmesswerts berechnet wird,
wobei das Vorgehen für das Bestimmen weiterer erster Durchflussmesswerte sowie weiterer erster Störspannungswerte wiederholt wird,
wobei bei der Berechnung des Prognosewerts und der Berechnung des nachfolgenden Durchflusswerts und des nachfolgenden Störspannungswerts eine Kalmanfilterung eingesetzt.

Die Anpassung kann beispielsweise über ein mathematisches Modell erfolgen.

Durch das Erfassen mehrerer Rohmessspannungen und Berechnen mehrerer erster Durchflussmesswerte während einer Konstantphase bei gelegentlichem Anpassen bzw. korrigieren mittels zweiter Durchflussmesswerte kann eine Wechselfrequenz von einer Konstantphase in eine anschließende Konstantphase und somit das zugehörige Ändern des Magnetfelds gering ausfallen. So können einzelne Konstantphasen Zeitdauern von mindestens 0.5 Sekunden oder insbesondere mindestens 2 Sekunden oder bevorzugt mindestens 10 Sekunden umfassen. Typische Zeitdauern von Wechselphasen sind dabei kleiner als 25 Millisekunden. Es ergibt sich somit ein besonders vorteilhaftes Verhältnis der Zeitdauer einer Konstantphase zu einer Zeitdauer einer Wechselphase von mindestens 20.

Mit den Begriffen "erste Konstantphase" und "zweite Konstantphase" sind zwei beliebige aneinander anschließende Konstantphasen bezeichnet.

Durch das Berechnen eines nächsten Durchflusswerts bzw. Störspannungswerts ausgehend von entsprechenden vorhergehenden Werten mittels eines prognostizierten Durchflusswerts bzw. Störspannungswerts und einem Rohmesswert lässt sich der Durchfluss unter geringem Rechenaufwand mit einer erforderlichen Genauigkeit bestimmen. Insbesondere für Feldgeräte der Mess- und Automatisierungstechnik und somit für magnetisch-induktive Durchflussmessgeräte ist dies ein wichtiger Aspekt.

Das Vorhersagen eines Prognosewerts für den Durchfluss basiert auf der Bestimmung einer Änderungsrate. Zusätzlich zur Änderungsrate können auch höhere zeitliche Ableitungen bestimmt werden, welche für die Berechnung weiterer nachfolgender Prognosewerte herangezogen werden können.

Das Vorhersagen eines Prognosewerts kann auch auf linearer oder quadratischer Fortsetzung oder insbesondere einer Taylorentwicklung basieren.

Die Anpassung erster Durchflussmesswerte an zweite Durchflussmesswerte kann beispielsweise durch Veränderung von Parametern des Kalmanfilters durchgeführt werden.

In einer Ausgestaltung des Verfahrens ist eine Gewichtung der Prognosewerte des Durchflusses sowie der Störspannung und des Rohmesswerts durchflussabhängig.

Beispielsweise kann eine Unsicherheit des Rohmesswerts durchflussabhängig sein, wodurch in diesem Fall seine Gewichtung angepasst werden kann.

In einer Ausgestaltung des Verfahrens wird dem Prognosewert des Durchflusses eine erste Varianz zugeordnet wird,
und wobei dem Prognosewert der Störspannung eine zweite Varianz zugeordnet wird,
und wobei dem Rohmesswert eine dritte Varianz zugeordnet wird,
wobei bei der Berechnung der ersten Durchflussmesswerts bzw. des ersten Störspannungswerts eine Gewichtung des jeweiligen Prognosewerts und des Rohmesswerts auf Basis der zugehörigen Varianzen durchgeführt wird.

In einer Ausgestaltung des Verfahrens basiert eine Schätzung der Varianzen auf einer Differenz zwischen dem entsprechenden Prognosewert und Rohmesswert oder einem Signal/Rauschen-Verhältnis.

In einer Ausgestaltung des Verfahrens wird bei Eintreten mindestens eines der folgenden Kriterien eine Wechselphase veranlasst:
die erste Varianz überschreitet einen ersten Schwellwert;
die zweite Varianz überschreitet einen zweiten Schwellwert;
die dritte Varianz überschreitet einen dritten Schwellwert;
eine Abweichung eines prognostizierten Störanteils von einem Störspannungswert eines überschreitet einen vierten Schwellwert;
Die Dauern verschiedener Konstantphasen können also unterschiedlich lang sein und an Randbedingungen angepasst werden.

In einer Ausgestaltung des Verfahrens werden mindestens zwei im Medium induzierte, durchflussabhängige elektrische Rohmessspannungen (R) abgegriffen,
wobei die Verläufe der Rohmessspannungen verglichen werden,
wobei bei einer Änderung eines Rohmessspannungsverlaufs bei fehlender entsprechender Änderung des jeweils mindestens einen anderen Rohmessspannungsverlaufs eine entsprechende Änderung der Messspannung als Störung interpretiert wird,
wobei bei gleichförmigen Rohmessspannungsverläufen eine Änderung der Rohmessspannung als durch eine Durchflussänderung interpretiert wird.

Gleichförmigkeit zwischen zwei Spannungsverläufen ist beispielsweise dann gegeben, wenn die Spannungsverläufe durch Multiplikation der Amplituden eines Spannungsverlaufs mit einem konstanten Faktor und/oder durch Verschiebung des einen Spannungsverlaufs um einen konstanten Wert übereinandergelegt werden können. Um eine Güte der Gleichförmigkeit zu erfassen, kann beispielsweise eine Korrelation zwischen beiden Spannungsverläufen ermittelt werden.

In einer Ausgestaltung des Verfahrens wird der Vergleich der Rohmessspannungen auf Basis der Rohmessspannungen oder davon abgeleiteter erster Durchflussmesswerte bzw. zweiter Durchflussmesswerte und/oder erste Störspannungswerte oder zweite Störspannungswerte durchgeführt.

In einer Ausgestaltung des Verfahrens werden mittels einer Masse eine erste Vergleichspannung zwischen der ersten Messelektrode und der Masse sowie eine zweite Vergleichsspannung zwischen der zweiten Messelektrode und der Masse abgegriffen werden,
wobei die Masse beispielsweise eine Masseelektrode oder eine an das Messrohr angeschlossene Rohrleitung oder eine Erdungsscheibe ist,
   und/oder wobei
mittels mindestens zweier Paare Messelektroden jeweils eine durchflussabhängige elektrische Rohmessspannung abgegriffen wird.

Auf diese Weise lässt sich erkennen, ob eine Änderung der abgegriffenen Rohmessspannung auf eine Durchflussänderung oder eine Störspannungsänderung zurückzuführen ist.

Die verschiedenen Paare Messelektroden können dabei entlang der Messrohrachse oder in einem Querschnitt versetzt zueinander angeordnet sein.

In einer Ausgestaltung des Verfahrens umfasst eine Konstantphase eine Bestimmung von mindestens 2, und insbesondere mindestens 10 und bevorzugt mindestens 50 Rohmesswerten. Eine Konstantphase kann aber auch bis zu 1000000 Rohmesswerte umfassen.

In einer Ausgestaltung des Verfahrens wird ein Rohmesswert aus einem Mitteln mehrerer abgegriffener Rohmessspannungen berechnet, wobei ein Mitteln mindestens 2 und insbesondere mindestens 5 und bevorzugt mindestens 10 und höchstens 100 und/oder insbesondere höchstens 50 und bevorzugt höchstens 20 abgegriffene Rohmessspannungen umfasst.

Bei elektronischen Mess-/Betriebsschaltungen mit geringer Rechenleistung kann eine solche Mittelung eine Entlastung darstellen, ohne die Genauigkeit des zu berechnenden Messspannungsverlaufs zu sehr einzuschränken.

In einer Ausgestaltung des Verfahrens wird das Magnetfeld während der Konstantphasen zumindest teilweise durch mindestens einen Remanenzmagnet erzeugt wird,
wobei ein Remanenzfeld des Remanenzmagnets während der Wechselphasen mittels eines Spulensystems umfassend mindestens eine Spule geändert und insbesondere umgepolt wird,
oder wobei Magnetfeld während der Konstantphasen zumindest teilweise durch mindestens einen Permanentmagnet und zumindest teilweise durch ein Spulensystem umfassend mindestens eine Spule erzeugt wird,
wobei das Magnetfeld während der Wechselphasen durch Änderung des durch das Spulensystem erzeugten Magnetfeldanteils geändert wird,
oder wobei das Magnetfeld durch ein Spulensystem umfassend mindestens eine Spule erzeugt wird.

Bei Verwendung mindestens eines Remanenzmagnets beschränkt sich die benötigte Energie zum Betreiben eines Magnetsystems auf das gelegentliche Ändern eines Remanenzmagnetfelds eines magnetischen Materials, was insbesondere ein Umpolen des Remanenzmagnetfelds bedeutet. Eine Änderung des Remanenzmagnetfelds wird dabei durch Beaufschlagen des Remanenzmagnets mit einem hinreichend starken, beispielsweise mittels einer Spule erzeugten Magnetfeldpuls hervorgerufen. Bei hinreichend langen Konstantphasen kann somit im Vergleich zu einem Magnetsystem, bei welchem ein Magnetfeld ausschließlich mit Spulen erzeugt wird Energie gespart werden.

Alternativ kann anstatt des mindestens einen Remanenzmagnets mindestens ein Permanentmagnet verwendet werden, um ein Magnetfeld zumindest teilweise zu erzeugen. Beispielsweise kann das Magnetfeld des Permanentmagnets durch Hinzufügen eines durch mindestens eine Spule erzeugten Magnetfelds moduliert werden. Beispielsweise können wechselnde Konstantphasen durch an- bzw. ausschalten oder eine generelle Modulation eines durch eine Spule erzeugten Magnetfelds realisiert werden. In diesem Fall ist das durch die Spule erzeugte Magnetfeld schwach genug, um das Remanenzfeld des Permanentmagnets nicht wesentlich zu beeinflussen.

Ob ein Magnet ein Permanentmagnet oder ein Remanenzmagnet ist, entscheidet sich somit anhand seiner Nutzung.

Ein erfindungsgemäßes magnetisch-induktives Durchflussmessgerät eingerichtet zur Durchführung des Verfahrens gemäß einem der vorigen Ansprüche umfasst:
Ein Messrohr mit einer Messrohrachse, wobei das Messrohr dazu eingerichtet ist, das Medium zu führen;
Ein Magnetsystem, welches dazu eingerichtet ist, ein senkrecht zur Messrohrachse stehendes Magnetfeld zu erzeugen;
Mindestens ein paar Messelektroden zum Abgreifen einer durch das Magnetfeld induzierten elektrischen Messspannung;
Eine elektronische Mess-/Betriebsschaltung, welche dazu eingerichtet ist, das Magnetsystem und die Messelektroden zu betreiben, sowie das Verfahren gemäß einem der vorigen Ansprüche durchzuführen.

In einer Ausgestaltung weist das Magnetsystem mindestens ein Spulensystem mit mindestens einer Spule auf, wobei das Magnetsystem insbesondere mindestens einen Remanenzmagnet oder insbesondere mindestens einen Permanentmagnet aufweist.

In einer Ausgestaltung weist das Durchflussmessgerät eine Masseelektrode auf.

Im Folgenden wird die Erfindung anhand von Ausführungsbeispielen beschrieben.
Fig. 1 zeigt einen beispielhaften, skizzierten Verlauf von Messsignalen und verarbeiteten Signalen;
Fig. 2 zeigt einen Ausschnitt der in Fig. 1 gezeigten Verläufe zur Beschreibung von erfindungsgemäßen Berechnungsschritten des Verfahrens;
Fig. 3 skizziert einen beispielhaften Verlauf eines Magnetfelds und eines Messspannungsverlaufs über mehrere Konstantphasen hinweg;
Fig. 4 skizziert beispielhafte Verläufe eines Messspannungsverlaufs sowie einer ersten Vergleichsrohmessspannung und einer zweiten Vergleichsrohmessspannung, welche mittels einer Masse abgegriffen werden;
Fig. 5 skizziert beispielhafte Verläufe zweier Rohmessspannungen, welche mittels zweier Messelektrodenpaare abgegriffen werden;
Fig. 6 skizziert beispielhafte Magnetfeldverläufe;
Fig. 7 skizziert ein magnetisch-induktives Durchflussmessgerät.

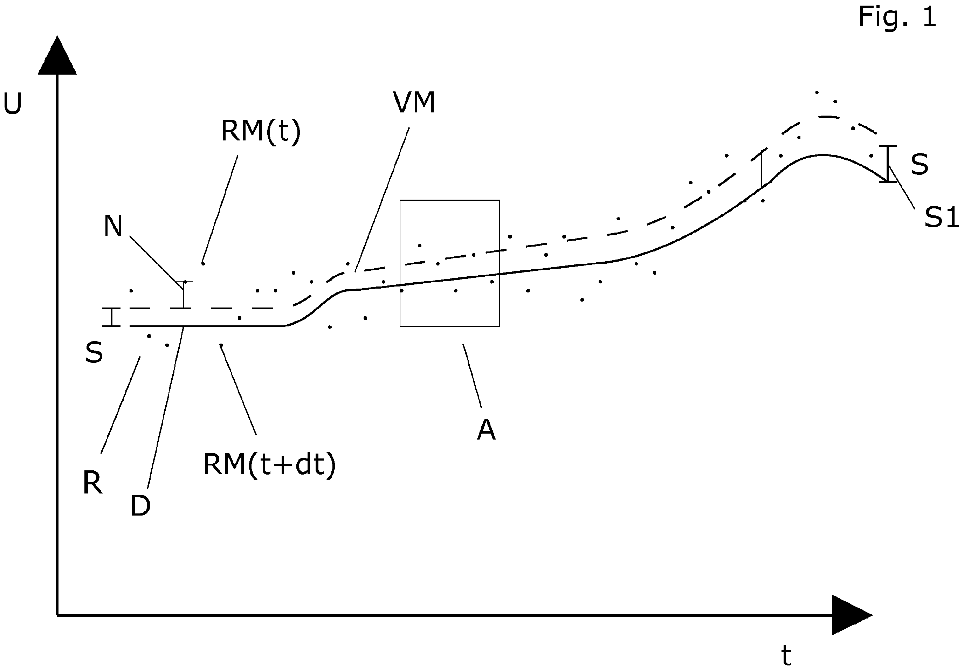

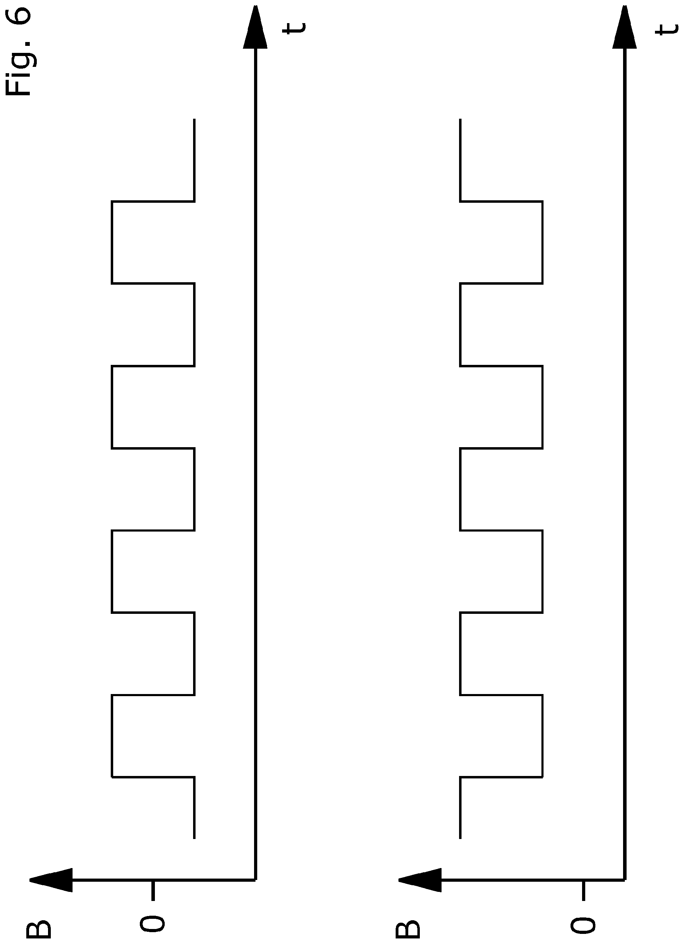

Fig. 1 zeigt einen beispielhaften Verlauf von einer Rohmessspannung R in einem Medium während einer Konstantphase mit konstantem Magnetfeld, welche mittels eines Paars Messelektroden 30 eines magnetisch-induktiven Messgeräts 1 abgegriffen wird, siehe Fig. 6. Die Rohmessspannung R setzt sich zusammen aus einem durchflussabhängigen Teil D, aus einem Störanteil S und einem Signalrauschen N, wobei D durch das ein Messrohr des Durchflussmessgeräts durchströmenden Mediums beaufschlagenden Magnetfelds sowie durch die Strömung des Mediums im Medium induziert wird. Der Störanteil entsteht durch elektrochemische Prozesse, welche an der Grenzfläche zwischen Medium und Messelektrode 31, 32 (siehe Fig. 6) ablaufen. Der Störanteil zeigt dabei eine zeitliche Dynamik, welche deutlich langsamer abläuft als typische Durchflussschwankungen, so dass diese durch signalverarbeitende Maßnahmen voneinander getrennt werden können. Der Verlauf der Rohmessspannung R wird durch beliebige Rohmessspannungswerte RM(t) wiedergegeben, an welche sich direkt nachfolgende Rohmessspannungswerte RM(t+dt) anschließen. Der Messspannungsverlauf umfasst also einen nicht genau bekannten durchflussabhängigen Teil D und einen nicht genau bekannten Störanteil S. Während einer Konstantphase K werden dabei Rohmessspannungen R jeweils ein erster Durchflussmesswert D1 sowie jeweils ein erster Störspannungswert S1 zugeordnet. Durch Addition der ersten Durchflussmesswerte mit zugehörigen ersten Störspannungswerten lässt sich ein Messspannungsverlauf VM berechnen, in welchem Messspannungsverlauf das Signalrauschen N zumindest teilweise unterdrückt ist.

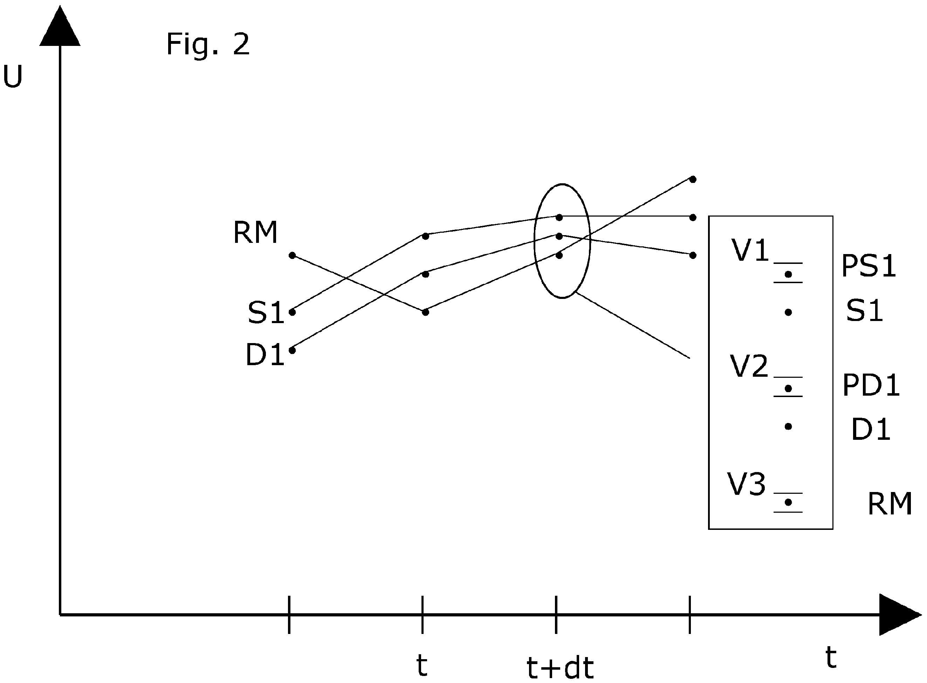

Fig. 2 zeigt einen beispielhaften vergrößerten Ausschnitt der in Fig. 1 gezeigten Verläufe, wobei ausgehend von einem beliebigen Zeitpunkt t die Bestimmung von direkt anschließenden ersten Durchflussmesswerten D1 sowie ersten Störspannungswerten S1 skizziert ist.

Ausgehend von bereits berechneten Werten D1 und S1 zum beliebigen Zeitpunkt t werden für den anschließenden Zeitpunkt t+dt jeweils ein Wert für den ersten Durchflussmesswert und den ersten Störspannungswert prognostiziert, was zu einem Prognosewert des Durchflusses PD1(t+dt) und einem Prognosewert der Störspannung PS1(t+dt) führt. Ein Messwert RM(t+dt) der Rohspannung R zum Zeitpunkt t+dt wird dazu genutzt, die Prognosewerte zu korrigieren, wobei Unsicherheiten bzw. Varianzen der Prognosewerte sowie des Rohspannungsmesswerts RM herangezogen werden können, um eine Gewichtung der einzelnen Werte bei der Korrektur zu bestimmen, siehe vergrößerter Ausschnitt.

Die Prognosen basieren auf einem Rechenmodell, wobei die Prognose des Durchflusses mit einer ersten Varianz V1 behaftet ist und wobei die Prognose der Störspannung mit einer zweiten Varianz V2 behaftet ist, welche Varianzen beispielsweise über das Rechenmodell berechnet oder abgeschätzt werden. Die Varianzen können aber auch auf Basis eines Durchflusses des Mediums bestimmt oder als konstant angenommen werden. Weitere Kriterien sind beispielsweise ein Signal-zu-Rauschen-Verhältnis der Rohmessspannung. Der zum Zeitpunkt t+dt gemessenen Rohmesswert RM(t+dt) weist eine Unsicherheit mit einer dritten Varianz V3 auf. Bei der Verrechnung des Prognosewerts PD1(t+dt) bzw. PS1(t+dt) mit dem Rohmesswert RM(t+dt) werden beide Werte beispielsweise auf Basis ihrer Varianzen gewichtet. Das Rechenmodell kann beispielsweise auf einem Kalmanfilter basieren. Durch die Verrechnung des Prognosewerts PD1 mit dem Rohmesswert RM erhält man einen neuen ersten Durchflussmesswert D1(t+dt) für den Zeitpunkt t+dt. Entsprechend erhält man durch die Verrechnung des Prognosewerts PS1 mit dem Rohmesswert RM einen neuen ersten Störspannungswert S1(t+dt). Durch Wiederholen der aufgeführten Schritte kann man also während einer Konstantphase den Verlauf des Durchflusses bzw. den Verlauf des durchflussabhängigen Anteils der Rohmessspannung R und den Verlauf der Störspannung bestimmen.

Falls eine Abweichung eines durch das Rechenmodell bestimmten Verlaufsmesswerts von einem durch das Rechenmodell bestimmten Störwert einen Grenzwert überschreitet, kann das Magnetsystem dazu veranlasst werden, von einer anliegenden Konstantphase in eine nächste Phase zu wechseln.

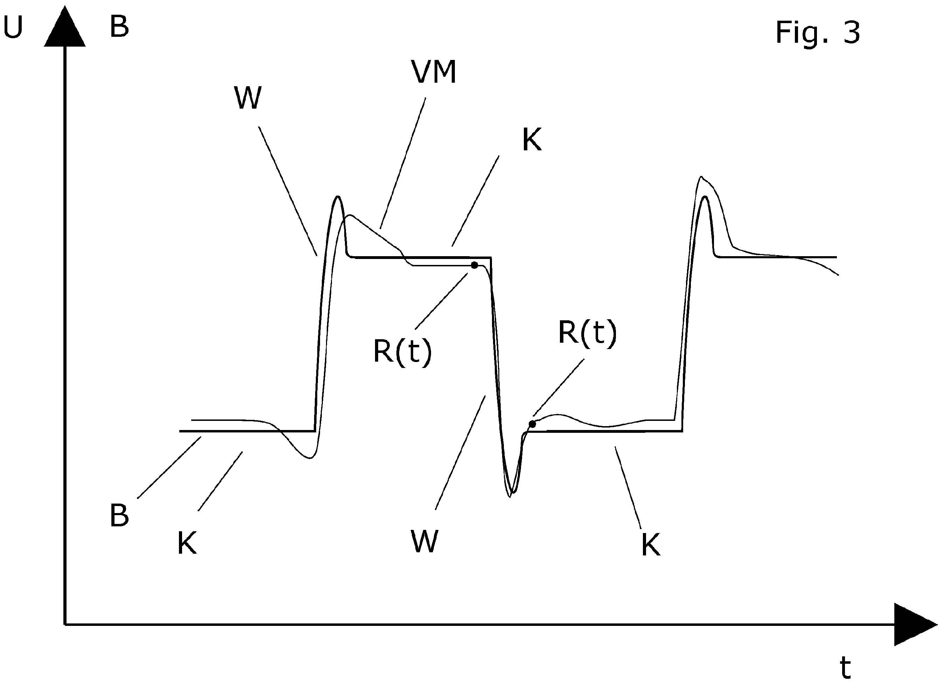

Fig. 3 skizziert den Verlauf eines Magnetfelds B und einen Rohspannungsverlauf R über mehrere Konstantphasen K und Wechselphasen W hinweg, wobei das Medium während der Konstantphasen mit konstantem Magnetfeld beaufschlagt wird, und wobei während einer Wechselphase eine Änderung des Magnetfelds durchgeführt wird. Der Rohspannungsverlauf R folgt dabei den Änderungen des Magnetfelds B, wobei der Modulation des Rohspannungsverlaufs R durch das Magnetfeld Durchflussänderungen und Störanteilsänderungen überlagert sind. Am Ende einer Konstantphase sowie zu Beginn einer anschließenden Konstantphase wird jeweils ein Rohspannungsmesswert RM(t) dazu verwendet, mittels Differenzbildung zwischen beiden Werten einen zweiten, verifizierenden Durchflussmesswert sowie einen zweiten, verifizierenden Störspannungswert zu bestimmen, mittels welcher das Rechenmodell neu abgeglichen werden kann, wobei der Abgleich rückwirkend sowie vorausschauend sein kann.

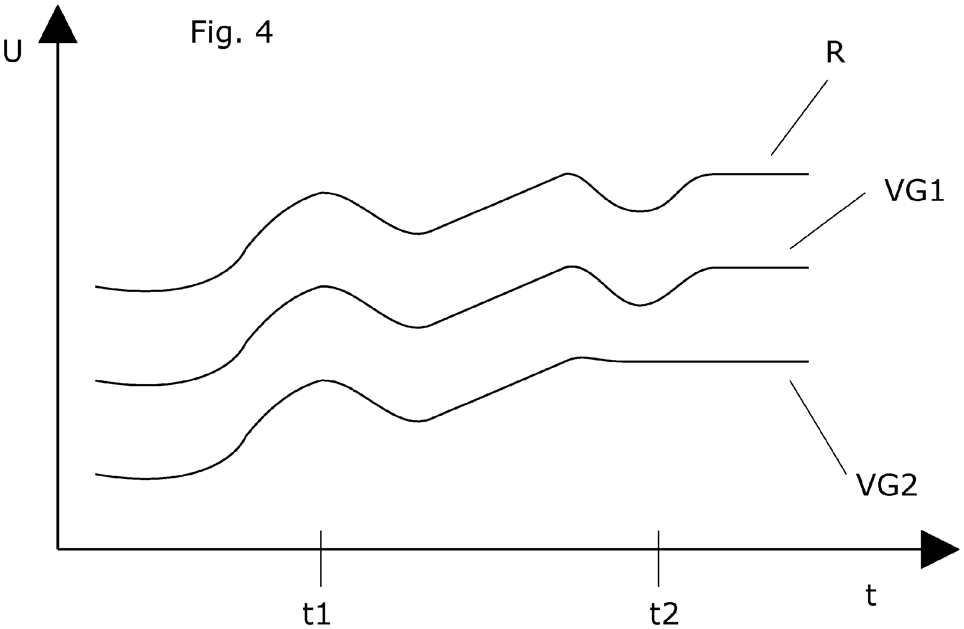

Fig. 4 beschreibt eine vorteilhafte Ausgestaltung des Verfahrens anhand eines Messspannungsverlaufs und den Verläufen einer ersten Vergleichsspannung VG1 sowie einer zweiten Vergleichsspannung VG2, wobei die erste Vergleichsspannung durch Bestimmen einer Potentialdifferenz zwischen der ersten Messelektrode 31 und einer Masse, bzw. insbesondere einer Masseelektrode ME ermittelt wird, und wobei die zweite Vergleichsspannung durch Bestimmen einer Potentialdifferenz zwischen der Masse bzw. Masseelektrode ME und der zweiten Messelektrode 32 ermittelt wird.

Für den Fall, dass beide Vergleichsspannungen einen gleichen Verlauf nehmen, wie zum Zeitpunkt t1 gezeigt, wird eine Messspannungsänderung als durch eine durch eine Durchflussänderung oder eine Störspannungsänderung bedingt erkannt. Falls eine signifikante Abweichung zwischen der ersten Vergleichsspannung und der zweiten Vergleichsspannung besteht, wie zum Zeitpunkt t2 gezeigt, wird eine Messspannungsänderung als durch eine Störspannungsänderung interpretiert.

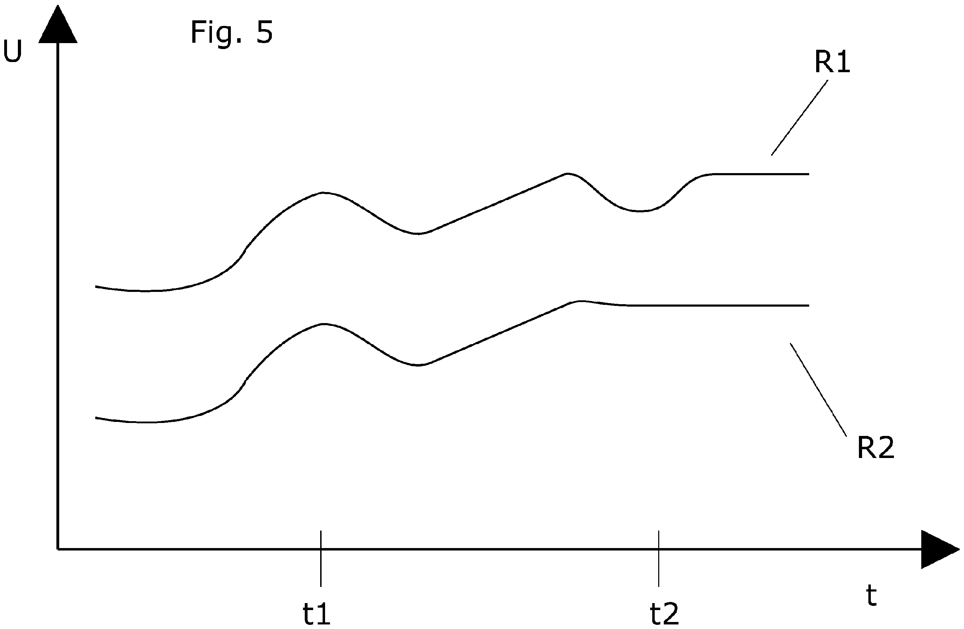

Alternativ oder zusätzlich können wie in Fig. 5 gezeigt auch zwei Rohmessspannungen R1 und R2 mittels zweier Messelektrodenpaare abgegriffen werden und die Verläufe der beiden Rohmessspannungen verglichen werden. Ein gleichförmiger Verlauf beider Spannungen wie beispielsweise zum Zeitpunkt t1 kann als Durchflussänderung interpretiert werden, und ein nichtgleichförmiger Verlauf als durch einen Störeinfluss verursacht. Auf diese Weise kann zwischen einer Durchflussänderung und einem Störeinfluss unterschieden werden und dem Rechenmodell Zusatzinformation zugeführt werden. Dieses Prinzip ist auch auf drei oder mehrere Messelektrodenpaare erweiterbar.

Der Vergleich der in Fig. 4 und Fig. 5 aufgeführten Spannungen kann auf Basis gemessener Rohmessspannungen oder davon abgeleiteter erster Durchflussmesswerte bzw. zweiter Durchflussmesswerte und/oder erste Störspannungswerte oder zweite Störspannungswerte durchgeführt werden.

Fig. 6 skizziert schematische Verläufe von Magnetfeldern, welche mit unterschiedlichen Magnetsystemen erzeugt werden können, wobei der obere Verlauf beispielsweise durch ein Magnetsystem mit einem Spulensystem oder durch ein Magnetsystem mit einem Spulensystem und mindestens einem Remanenzmagnet erzeugt werden kann.

Das Spulensystem kann beispielsweise ein Magnetfeld erzeugen, welches um einen Nullpunkt herum oszilliert. Ein solches Magnetfeld kann beispielsweise auch dadurch erzeugt werden, dass ein Remanenzmagent durch dessen Beaufschlagen mittels eines Magnetpulses in seiner Remanenz geändert bzw. umgepolt wird.

Das Magnetfeld muss dabei nicht symmetrisch hinsichtlich des Nullpunkts sein. Die in Fig. 6 gezeigten Magnetfeldverläufe sind beispielhaft und nicht einschränkend auszulegen.

Der untere Magnetfeldverlauf skizziert einen Verlauf, bei welchem ein Grundmagnetfeld durch einen Permanentmagnet erzeugt wird, wobei ein Gesamtmagnetfeld durch Modulation des Grundmagnetfelds mittels eines Spulensystems hervorgerufen wird.

Zeitdauern aufeinanderfolgender Konstantphasen können anders als bei den in Fig. 6 gezeigten Verläufen auch unterschiedlich sein. Die Zeitdauern der in den in Fig. 6 gezeigten Verläufen sind als beispielhaft und nicht einschränkend anzusehen.

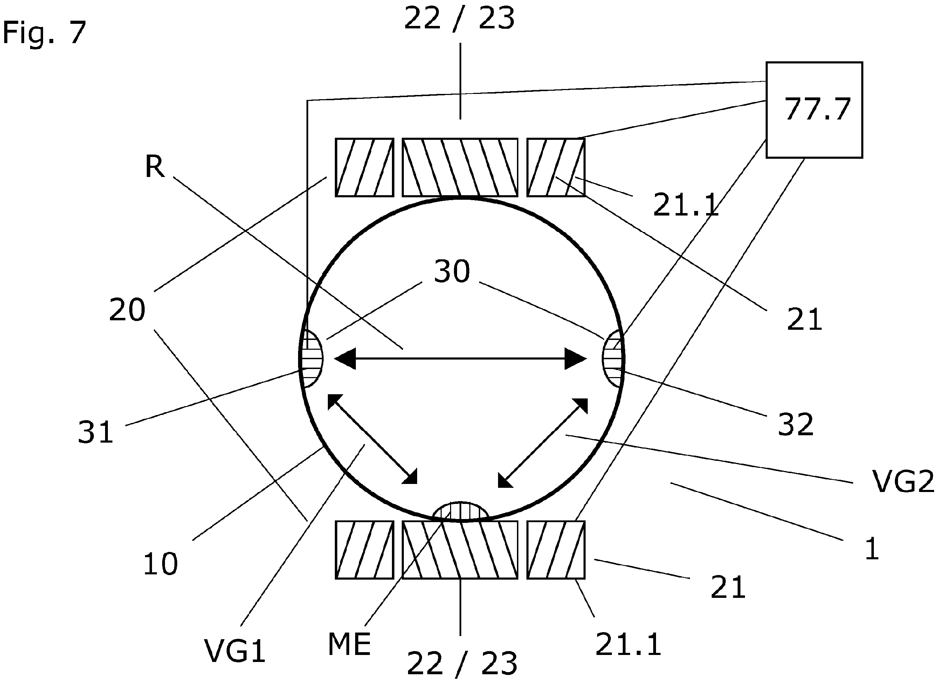

Fig. 7 skizziert einen schematischen Aufbau eines magnetisch-induktiven Durchflussmessgeräts 1 mit einem Messrohr 10 und einem Magnetsystem 20 umfassend zwei Spulensysteme 21 mit jeweils einer Spule 21.1 und zwei Remanenzmagnete 22 bzw. Permanentmagnete 23, welche jeweils in einem Spulensystem angeordnet sind. Das magnetisch-induktive Durchflussmessgerät 1 weist des Weiteren ein Paar Messelektroden 30 umfassend eine erste Messelektrode 31 und eine zweite Messelektrode 32 auf, mit welchen die Rohmessspannung R abgreifbar ist. Zusätzlich weist das Durchflussmessgerät eine Masseelektrode auf, mittels welcher eine erste Vergleichsrohmessspannung VG1 zwischen der ersten Messelektrode 31 und der Masseelektrode ME sowie eine zweite Vergleichsrohmessspannung VG2 zwischen der Masseelektrode und der zweiten Messelektrode 32 abgreifbar ist. Eine elektronische Mess-/Betriebsschaltung 77.7 des Durchflussmessgeräts ist dazu eingerichtet, das Magnetsystem sowie die Messelektroden und die Masse zu betreiben und das erfindungsgemäße Verfahren durchzuführen.

### Bezugszeichenliste

- 1: magnetisch-induktives Durchflussmessgerät
- 10: Messrohr
- 20: Magnetsystem
- 21: Spulensystem
- 21.1: Spule
- 22: Remanenzmagnet
- 23: Permanentmagnet
- 30: Paar Messelektroden
- 31: erste Messelektrode
- 32: zweite Messelektrode
- 77.7: elektronische Mess-/Betriebsschaltung
- K: Konstantphase
- W: Wechselphase
- R: Rohmessspannung
- RM(t): Rohmesswert
- D1: erste Durchflussmesswerte
- D: durchflussabhängiger Anteil der Rohmessspannung
- S: Störanteil der Rohmessspannung
- S1: erste Störspannungswerte
- N: Rauschanteil
- VM: Messspannungsverlauf
- VM(t): Verlaufsmesswert
- PD1: Prognose Durchfluss
- PS1: Prognose Störspannung
- VS: Störanteilsverlauf
- M: Masse
- VG1: erste Vergleichsspannung
- VG2: zweite Vergleichsspannung
- R1: erste Rohmessspannung
- R2: zweite Rohmessspannung
- ME: Masseelektrode
- V1: erste Varianz
- V2: zweite Varianz
- V3: dritte Varianz

## Patentansprüche

1. Verfahren zum Betreiben eines magnetisch-induktiven Durchflussmessgeräts (1) zum Messen des Volumendurchflusses oder der Durchflussgeschwindigkeit eines durch ein Messrohr (10) des Durchflussmessgeräts strömenden Mediums,
wobei ein Magnetsystem (20) das Medium im Messrohr mit einem senkrecht zu einer Messrohrachse stehenden Magnetfeld beaufschlagt,
wobei ein Magnetfeldverlauf Konstantphasen (K) mit zeitlich konstantem Magnetfeld und Wechselphasen (W) mit zeitlich veränderlichem Magnetfeld aufweist,
wobei die Wechselphasen dazu eingerichtet sind, von einer ersten Konstantphase mit einem ersten Magnetfeld in eine auf die erste Konstantphase anschließende zweite Konstantphase mit einem zweiten Magnetfeld zu wechseln,
wobei das zweite Magnetfeld ungleich dem ersten Magnetfeld ist;
wobei mittels mindestens einem Paar Messelektroden (30) umfassend eine erste Messelektrode (31) und eine zweite Messelektrode (32) eine im Medium induzierte, durchflussabhängige elektrische Rohmessspannung (R) abgegriffen wird;
wobei eine elektronische Mess-/Betriebsschaltung (77.7) mit den Messelektroden elektrisch verbunden ist, welche die Rohmessspannung auswertet und Durchflussmesswerte ermittelt,
wobei während jeder Konstantphase eine Mehrzahl Rohmesswerte (RM(t)) der Rohmessspannung (R) bestimmt werden, wobei sich die Rohmessspannung (R) aus einem durchflussabhängigen Anteil (D), einem Störanteil (S) und einem Rauschanteil (N) zusammensetzt,
wobei aus jedem Rohmesswert (RM(t)) jeweils ein erster Durchflussmesswert (D1) und ein erster Störspannungswert (S1) berechnet wird,
wobei ein Rohmesswert (RM(t)) der ersten Konstantphase und ein Rohmesswert (RM(t)) der an die erste Konstantphase anschließenden zweiten Konstantphase zur Berechnung eines zweiten Durchflussmesswerts (D2) sowie eines zweiten Störspannungswerts (S2) des Störanteils (S) herangezogen wird,
wobei erste Durchflussmesswerte (D1) der ersten Konstantphase und/oder zweiten Konstantphase mittels der Kenntnis des zweiten Durchflussmesswerts (D2) und des berechneten zweiten Störspannungswerts (S2) angepasst werden,
**dadurch gekennzeichnet, dass** auf Basis eines ersten Durchflussmesswerts (D1(t)) ein anschließender Prognosewert (PD1(t+dt)) des Durchflusses vorhergesagt wird, und wobei auf Basis eines ersten Störspannungswerts (S1(t)) ein anschließender Prognosewert (PS1(t+dt)) des Störanteils vorhergesagt wird,
wobei ein weiterer Rohmesswert (RM(t+dt)) gemessen wird,
wobei ein erster Durchflussmesswert (D1(t+dt)) mittels des Prognosewert des Durchflusses (PD1(t+dt)) und mittels des weiteren Rohmesswerts (RM(t+dt)) berechnet wird, und wobei ein erster Störspannungswert (S1(t+dt)) mittels des Prognosewert der Störspannung (PS1(t+dt)) und mittels des weiteren Rohmesswerts (RM(t+dt)) berechnet wird,
wobei das Vorgehen für das Bestimmen weiterer erster Durchflussmesswerte (D1) sowie weiterer erster Störspannungswerte (S1) wiederholt wird,
wobei bei der Berechnung der Prognosewerte (PD1(t+dt), PS1(t+dt)) und der Berechnung des ersten Durchflussmesswerts (D1(t+dt)) sowie des ersten Störspannungswerts S1(t+dt) ein Kalmanfilter eingesetzt wird.

2. Verfahren nach Anspruch 1
wobei eine Gewichtung der Prognosewerte des Durchflusses sowie der Störspannung (PD1(t+dt)) und des Rohmesswerts (RM(t+dt)) durchflussabhängig ist.

3. Verfahren nach Anspruch 1 oder 2,
wobei die Vorhersage der Prognosewerte des Durchflusses sowie der Störspannung beispielsweise auf linearer oder quadratischer Fortsetzung oder insbesondere einer Taylorentwicklung beruht.

4. Verfahren nach einem der Ansprüche 1 bis 3,
wobei dem Prognosewert des Durchflusses (PD1(t+dt)) eine erste Varianz (V1) zugeordnet wird,
und wobei dem Prognosewert der Störspannung (PS1(t+dt)) eine zweite Varianz (V2) zugeordnet wird,
und wobei dem Rohmesswert (RM(t+dt)) eine dritte Varianz (V3) zugeordnet wird,
wobei bei der Berechnung des ersten Durchflussmesswerts (D1) bzw. des ersten Störspannungswerts (S1) eine Gewichtung des jeweiligen Prognosewerts und des Rohmesswerts auf Basis der zugehörigen Varianzen durchgeführt wird.

5. Verfahren nach Anspruch 4,
wobei eine Schätzung der Varianzen (V1, V2, V3) auf einer Differenz zwischen dem entsprechenden Prognosewert (PD1(t+dt), PS1(t+dt)) und Rohmesswert (RM(t+dt)) oder einem Signal/Rauschen-Verhältnis basiert.

6. Verfahren nach einem der vorigen Ansprüche 1 bis 5,
wobei bei Eintreten mindestens eines der folgenden Kriterien eine Wechselphase veranlasst wird:
die erste Varianz überschreitet einen ersten Schwellwert;
die zweite Varianz überschreitet einen zweiten Schwellwert;
die dritte Varianz überschreitet einen dritten Schwellwert;
eine Abweichung eines prognostizierten Störanteils (PS(t+dt)) von einem ersten Störwert (S1) eines überschreitet einen vierten Schwellwert.

7. Verfahren nach einem der vorigen Ansprüche,
wobei mindestens zwei im Medium induzierte, durchflussabhängige elektrische Rohmessspannungen (R) abgegriffen werden,
wobei die Verläufe der Rohmessspannungen verglichen werden,
wobei bei einer Änderung eines Rohmessspannungsverlaufs bei fehlender entsprechender Änderung des jeweils mindestens einen anderen Rohmessspannungsverlaufs eine entsprechende Änderung der Messspannung als Störung interpretiert wird,
wobei bei gleichförmigen Rohmessspannungsverläufen eine Änderung der Rohmessspannung als durch eine Durchflussänderung interpretiert wird.

8. Verfahren nach Anspruch 7,
wobei der Vergleich der Rohmessspannungen auf Basis der Rohmessspannungen oder davon abgeleiteter erster Durchflussmesswerte bzw. zweiter Durchflussmesswerte und/oder erste Störspannungswerte oder zweite Störspannungswerte durchgeführt wird.

9. Verfahren nach einem der Ansprüche 7 oder 8,
wobei mittels einer Masse (M) eine erste Vergleichspannung (VG1) zwischen der ersten Messelektrode (31) und der Masse sowie eine zweite Vergleichsspannung (VG2) zwischen der zweiten Messelektrode (32) und der Masse abgegriffen werden,
wobei die Masse beispielsweise eine Masseelektrode (ME) oder eine an das Messrohr angeschlossene Rohrleitung oder eine Erdungsscheibe ist,
und/oder wobei
mittels mindestens zweier Paare Messelektroden (30) jeweils eine durchflussabhängige elektrische Rohmessspannung (R) abgegriffen wird.

10. Verfahren nach einem der vorigen Ansprüche,
wobei eine Konstantphase mindestens 2, und insbesondere mindestens 10 und bevorzugt mindestens 50 Rohmesswerte umfasst.

11. Verfahren nach einem der vorigen Ansprüche,
wobei ein Rohmesswert aus einem Mitteln mehrerer abgegriffener Rohmessspannungen berechnet wird, wobei ein Mitteln mindestens 2 und insbesondere mindestens 5 und bevorzugt mindestens 10 und/oder höchstens 100 und insbesondere höchstens 50 und bevorzugt höchstens 20 abgegriffene Rohmessspannungen umfasst.

12. Verfahren nach einem der vorigen Ansprüche,
wobei das Magnetfeld während der Konstantphasen zumindest teilweise durch mindestens einen Remanenzmagnet (22) erzeugt wird, und wobei ein Remanenzfeld des Remanenzmagnets während der Wechselphasen mittels eines Spulensystems (21) umfassend mindestens eine Spule (21.1) geändert und insbesondere umgepolt wird,
oder wobei Magnetfeld während der Konstantphasen zumindest teilweise durch mindestens einen Permanentmagnet (23) oder zumindest teilweise durch ein Spulensystem (21) umfassend mindestens eine Spule (21.1) erzeugt wird, und wobei das Magnetfeld während der Wechselphasen durch Änderung des durch das Spulensystem erzeugten Magnetfeldanteils geändert wird,
oder wobei das Magnetfeld durch ein Spulensystem umfassend mindestens eine Spule erzeugt wird.

13. Magnetisch-induktives Durchflussmessgerät (1) eingerichtet zur Durchführung des Verfahrens gemäß einem der vorigen Ansprüche umfassend:
Ein Messrohr (10) mit einer Messrohrachse (11), wobei das Messrohr dazu eingerichtet ist, das Medium zu führen;
Ein Magnetsystem (20), welches dazu eingerichtet ist, ein senkrecht zur Messrohrachse stehendes Magnetfeld zu erzeugen;
Mindestens ein paar Messelektroden (30, 31, 32) zum Abgreifen einer durch das Magnetfeld induzierten elektrischen Messspannung;
Eine elektronische Mess-/Betriebsschaltung (77.7), welche dazu eingerichtet ist, das Magnetsystem (20) und die Messelektroden (31, 32) zu betreiben, sowie das Verfahren gemäß einem der vorigen Ansprüche durchzuführen.

14. Magnetisch-induktives Durchflussmessgerät nach Anspruch 13,
wobei das Magnetsystem (20) mindestens ein Spulensystem (21) mit mindestens einer Spule (21.1) aufweist, wobei das Magnetsystem insbesondere mindestens einen Remanenzmagnet (22) oder insbesondere mindestens einen Permanentmagnet (23) aufweist.

15. Magnetisch-induktives Durchflussmessgerät nach Anspruch 13 oder 14,
wobei das Durchflussmessgerät eine Masseelektrode (ME) aufweist.

## Claims

1. A method for operating a magneto-inductive flowmeter (1) for measuring the volume flow or the flow velocity of a medium flowing through a measuring tube (10) of the flowmeter,
wherein a magnetic system (20) generates a magnetic field in the medium in the measuring tube, said magnetic field being perpendicular to a measuring tube axis,
wherein a magnetic field curve has constant phases (K) with a magnetic field that is constant overtime, and alternating phases (W) with a magnetic field that changes over time,
wherein the alternating phases are configured to change from a first constant phase with a first magnetic field to a second constant phase which follows on from the first constant phase with a second magnetic field,
wherein the second magnetic field is not identical to the first magnetic field;
wherein using at least one pair of measuring electrodes (30), comprising a first measuring electrode (31) and a second measuring electrode (32), a flow-dependent electric raw measured voltage (R) induced in the medium is tapped;
wherein an electronic measuring/operating circuit (77.7) is electrically connected to the measuring electrodes, said circuit evaluating the raw measured voltage and calculating measured flow values,
wherein during each constant phase, a number of raw measured values (RM(t)) for the raw measured voltage (R) are determined, wherein the raw measured voltage (R) is composed of a flow-dependent component (D), an interference component (S), and a noise component (N),
wherein a first measured flow value (D1) and a first interference voltage value (S1) are calculated from each raw measured value (RM(t)),
wherein a raw measured value (RM(t)) from the first constant phase and a raw measured value (RM(t)) from the second constant phase which follows on from the first constant phase are used to calculate a second measured flow value (D2) and a second interference voltage value (S2) of the interference component (S),
wherein first measured flow values (D1) from the first constant phase and/or second constant phase are adapted based on the second measured flow value (D2) and the calculated second interference voltage value (S2),
**characterized in that** a subsequent predicted value (PD1(t+dt)) for flow is forecast based on a first measured flow value (D1(t)), and wherein a subsequent predicted value (PS1(t+dt)) for the interference component is forecast based on a first interference voltage value (S1(t)),
wherein an additional raw measured value (RM(t+dt)) is measured,
wherein a first measured flow value (D1(t+dt)) is calculated using the predicted value for flow (PD1(t+dt)) and using the additional raw measured value (RM(t+dt)), and wherein a first interference voltage value (S1(t+dt)) is calculated using the predicted value for interference voltage (PS1(t+dt)) and using the additional raw measured value (RM(t+dt)),
wherein the procedure for determining additional first measured flow values (D1) and additional first interference voltage values (S1) is repeated,
wherein a Kalman filter is used to calculate the predicted values (PD1(t+dt), PS1(t+dt)) and to calculate the first measured flow value (D1(t+dt)), and the first interference voltage value (S1(t+dt)).

2. The method as claimed in claim 1,
wherein a weighting of the predicted values for flow and for interference voltage (PD1(t+dt)) and the raw measured value (RM(t+dt)) is flow-dependent.

3. The method as claimed in claim 1 or 2,
wherein the forecast for the predicted values for flow and for interference voltage is, for example, based on a linear or quadratic sequence or, in particular, on a Taylor expansion.

4. The method as claimed in one of claims 1 to 3,
wherein a first variance (V1) is assigned to the predicted value for flow (PD1(t+dt)),
and wherein a second variance (V2) is assigned to the predicted value for interference voltage (PS1(t+dt)),
and wherein a third variance (V3) is assigned to the raw measured value (RM(t+dt)),
wherein the relevant predicted value and the raw measured value are weighted based on the associated variances when calculating the first measured flow value (D1) and the first interference voltage value (S1).

5. The method as claimed in claim 4,
wherein an estimation of the variances (V1, V2, V3) is based on a difference between the relevant predicted value (PD1(t+dt), PS1(t+dt)) and the raw measured value (RM(t+dt)) or a signal-to-noise ratio.

6. The method as claimed in one of the preceding claims 1 to 5,
wherein an alternating phase is initiated if at least one of the following criteria apply:
The first variance exceeds a first threshold value;
The second variance exceeds a second threshold value;
The third variance exceeds a third threshold value;
A deviation of a predicted interference component (PS(t+dt)) from a first interference value (S1) exceeds a fourth threshold value.

7. The method as claimed in one of the preceding claims,
wherein at least two flow-dependent electric raw measured voltages (R) induced in the medium are tapped,
wherein the curves of the raw measured voltages are compared,
wherein a corresponding change in the measured voltage is interpreted as a fault if one raw measured voltage curve changes without a corresponding change in the at least one other raw measured voltage curve,
wherein a change in the raw measured voltage is interpreted as a flow change if the raw measured voltage curves are identical.

8. The method as claimed in claim 7,
wherein the comparison of the raw measured voltages is based on the raw measured voltages or first measured flow values and second measured flow values and/or first interference voltage values or second interference voltage values derived therefrom.

9. The method as claimed in one of claims 7 or 8,
wherein using ground (M), a first comparison voltage (VG1) between the first measuring electrode (31) and ground, and a second comparison voltage (VG2) between the second measuring electrode (32) and ground, are tapped,
wherein ground is, for example, a ground electrode (ME) or a pipe connected to the measuring tube, or a grounding ring,
and/or wherein
using at least two pairs of measuring electrodes (30), a flow-dependent electric raw measured voltage (R) is tapped.

10. The method as claimed in one of the preceding claims,
wherein a constant phase comprises at least 2, and in particular at least 10, and
preferably at least 50 raw measured values.

11. The method as claimed in one of the preceding claims,
wherein a raw measured value is calculated from an average of multiple tapped raw measured voltages, wherein an average comprises at least 2, and in particular at least 5, and preferably at least 10, and/or at most 100, and in particular at most 50, and preferably at most 20, tapped raw measured voltages.

12. The method as claimed in one of the preceding claims,
wherein during the constant phases, the magnetic field is at least partly generated by at least one remanent magnet (22), and wherein a remanent field of the remanent magnet is modified during the alternating phases using a coil system (21), comprising at least one coil (21.1), and in particular has its polarity reversed,
or wherein during the constant phases, the magnetic field is at least partly generated by at least one permanent magnet (23) or at least partly by a coil system (21), comprising at least one coil (21.1), and wherein the magnetic field is modified during the alternating phases by changing the magnetic field component that is generated by the coil system,
or wherein the magnetic field is generated by a coil system, comprising at least one coil.

13. A magneto-inductive flowmeter (1) configured to implement the method as claimed in one of the preceding claims, comprising:
A measuring tube (10) with a measuring tube axis (11), wherein the measuring tube is configured to conduct the medium;
A magnetic system (20) which is configured to generate a magnetic field positioned perpendicular to the measuring tube axis;
At least one pair of measuring electrodes (30, 31, 32) for tapping an electric measured voltage induced by the magnetic field;
An electronic measuring/operating circuit (77.7) which is configured to operate the magnetic system (20) and the measuring electrodes (31, 32) and to implement the method as claimed in one of the preceding claims.

14. The magneto-inductive flowmeter as claimed in claim 13,
wherein the magnetic system (20) has at least one coil system (21) with at least one coil (21.1), wherein the magnetic system in particular has at least one remanent magnet (22) or in particular at least one permanent magnet (23).

15. The magneto-inductive flowmeter as claimed in claims 13 or 14,
wherein the flowmeter has a ground electrode (ME).

## Revendications

1. Procédé destiné à l'exploitation d'un débitmètre électromagnétique (1), lequel débitmètre est destiné à la mesure du débit volumique ou de la vitesse d'écoulement d'un produit s'écoulant à travers un tube de mesure (10) dudit débitmètre,
un système magnétique (20) soumettant le produit dans le tube de mesure à un champ magnétique perpendiculaire à l'axe de tube de mesure,
une courbe de champ magnétique présentant des phases constantes (K) avec un champ magnétique constant dans le temps et des phases alternées (W) avec un champ magnétique variable dans le temps,
les phases alternées étant conçues pour passer d'une première phase constante avec un premier champ magnétique à une deuxième phase constante avec un deuxième champ magnétique qui fait suite à la première phase constante,
le deuxième champ magnétique étant différent du premier champ magnétique ;
procédé pour lequel, au moyen d'au moins une paire d'électrodes de mesure (30) comprenant une première électrode de mesure (31) et une deuxième électrode de mesure (32), on prélève une tension mesurée électrique brute (R) induite dans le produit et dépendant du débit ;
un circuit électronique de mesure/d'exploitation (77.7) étant relié électriquement aux électrodes de mesure, lequel circuit évalue la tension mesurée brute et détermine des valeurs mesurées de débit,
une pluralité de valeurs mesurées brutes (RM(t)) de la tension mesurée brute (R) étant déterminées pendant chaque phase constante, la tension mesurée brute (R) se composant d'une part dépendant du débit (D), d'une part parasite (S) et d'une part de bruit (N),
une première valeur mesurée de débit (D1) et une première valeur de tension parasite (S1) étant respectivement calculées à partir de chaque valeur mesurée brute (RM(t)),
une valeur mesurée brute (RM(t)) de la première phase constante et une valeur mesurée brute (RM(t)) de la deuxième phase constante faisant suite à la première phase constante étant utilisées pour calculer une deuxième valeur mesurée de débit (D2) ainsi qu'une deuxième valeur de tension parasite (S2) de la composante parasite (S),
les premières valeurs mesurées de débit (D1) de la première phase constante et/ou de la deuxième phase constante étant adaptées au moyen de la connaissance de la deuxième valeur mesurée de débit (D2) et de la deuxième valeur de tension parasite (S2) calculée,
**caractérisé en ce que**, sur la base d'une première valeur mesurée de débit (D1(t)), une valeur prévisionnelle suivante (PD1(t+dt)) du débit est prédite, et **en ce que**, sur la base d'une première valeur de tension parasite (S1(t)), une valeur prévisionnelle suivante (PS1(t+dt)) de la composante parasite est prédite,
une autre valeur mesurée brute (RM(t+dt)) étant mesurée,
une première valeur mesurée de débit (D1(t+dt)) étant calculée au moyen de la valeur prévisionnelle du débit (PD1(t+dt)) et au moyen de l'autre valeur mesurée brute (RM(t+dt)), et une première valeur de tension parasite (S1(t+dt)) étant calculée au moyen de la valeur prévisionnelle de la tension parasite (PS1(t+dt)) et au moyen de l'autre valeur mesurée brute (RM(t+dt)),
la procédure étant répétée pour la détermination d'autres premières valeurs mesurées de débit (DI) ainsi que d'autres premières valeurs de tension parasite (S1),
un filtre de Kalman étant utilisé lors du calcul des valeurs prévisionnelles (PD1(t+dt), PS1(t+dt)) et du calcul de la première valeur mesurée de débit (D1(t+dt)) ainsi que de la première valeur de tension parasite S1(t+dt).

2. Procédé selon la revendication 1
pour lequel une pondération des valeurs prévisionnelles du débit ainsi que de la tension parasite (PD1(t+dt)) et de la valeur mesurée brute (RM(t+dt)) est fonction du débit.

3. Procédé selon la revendication 1 ou 2,
pour lequel la prédiction des valeurs prévisionnelles du débit ainsi que de la tension parasite est basée, par exemple, sur une suite linéaire ou quadratique ou notamment sur un développement de Taylor.

4. Procédé selon l'une des revendications 1 à 3,
pour lequel une première variance (V1) est attribuée à la valeur prévisionnelle du débit (PD1(t+dt)),
et pour lequel une deuxième variance (V2) est attribuée à la valeur prévisionnelle de la tension parasite (PS1(t+dt)),
et pour lequel une troisième variance (V3) est associée à la valeur mesurée brute (RM(t+dt)),
une pondération de la valeur prévisionnelle respective et de la valeur mesurée brute étant effectuée sur la base des variances associées lors du calcul de la première valeur mesurée de débit (D1) ou de la première valeur de tension parasite (S1).

5. Procédé selon la revendication 4,
pour lequel une estimation des variances (V1, V2, V3) est basée sur une différence entre la valeur prévisionnelle correspondante (PD1(t+dt), PS1(t+dt)) et la valeur mesurée brute (RM(t+dt)) ou un rapport signal/bruit.

6. Procédé selon l'une des revendications précédentes 1 à 5,
pour lequel une phase alternée est déclenchée lorsqu'au moins l'un des critères suivants se produit :
la première variance dépasse une première valeur seuil ;
la deuxième variance dépasse une deuxième valeur seuil ;
la troisième variance dépasse une troisième valeur seuil ;
un écart d'une composante parasite prévisionnelle (PS(t+dt)) par rapport à une première valeur parasite (S1) dépasse une quatrième valeur seuil.

7. Procédé selon l'une des revendications précédentes,
pour lequel au moins deux tensions mesurées électriques brutes (R) induites dans le produit et dépendant du débit sont prélevées,
les courbes des tensions mesurées brutes étant comparées,
en cas de modification d'une courbe de tension mesurée brute et en l'absence d'une modification correspondante de la ou des autres courbes de tension mesurées brute, une modification correspondante de la tension mesurée étant interprétée comme une perturbation,
une modification de la tension mesurée brute étant interprétée comme étant due à une modification du débit lorsque les courbes de tension mesurées brute sont uniformes.

8. Procédé selon la revendication 7,
pour lequel la comparaison des tensions mesurées brutes est effectuée sur la base des tensions mesurées brutes ou des premières valeurs mesurées de débit ou des deuxièmes valeurs mesurées de débit qui en sont dérivées et/ou des premières valeurs de tension parasite ou des deuxièmes valeurs de tension parasite.

9. Procédé selon l'une des revendications 7 ou 8,
pour lequel une première tension de comparaison (VG1) entre la première électrode de mesure (31) et la masse ainsi qu'une deuxième tension de comparaison (VG2) entre la deuxième électrode de mesure (32) et la masse sont prélevées au moyen d'une masse (M),
la masse étant par exemple une électrode de masse (ME) ou une conduite raccordée au tube de mesure ou un disque de mise à la terre,
et/ou pour lequel
au moyen d'au moins deux paires d'électrodes de mesure (30), on prélève respectivement une tension mesurée électrique brute (R) dépendant du débit.

10. Procédé selon l'une des revendications précédentes,
pour lequel une phase constante comprend au moins 2, et notamment au moins 10 et de préférence au moins 50 valeurs mesurées brutes.

11. Procédé selon l'une des revendications précédentes,
pour lequel une valeur mesurée brute est calculée à partir d'une moyenne de plusieurs tensions mesurées brutes prélevées, une moyenne comprenant au moins 2 et notamment au moins 5 et de préférence au moins 10 et/ou au plus 100 et notamment au plus 50 et de préférence au plus 20 tensions mesurées brutes prélevées.

12. Procédé selon l'une des revendications précédentes,
pour lequel le champ magnétique est généré pendant les phases constantes au moins en partie par au moins un aimant rémanent (22), et
pour lequel un champ rémanent de l'aimant rémanent est modifié et notamment inversé pendant les phases alternées au moyen d'un système de bobines (21) comprenant au moins une bobine (21.1),
ou pour lequel le champ magnétique est généré pendant les phases constantes au moins en partie par au moins un aimant permanent (23) ou au moins en partie par un système de bobines (21) comprenant au moins une bobine (21.1), et pour lequel le champ magnétique est modifié pendant les phases alternées par modification de la part de champ magnétique générée par le système de bobines,
ou pour lequel le champ magnétique est généré par un système de bobines comprenant au moins une bobine.

13. Débitmètre électromagnétique (1) conçu pour mettre en oeuvre le procédé selon l'une des revendications précédentes, le débitmètre comprenant :
Un tube de mesure (10) comportant un axe de tube de mesure (11), le tube de mesure étant conçu pour guider le produit ;
Un système magnétique (20), lequel est conçu pour générer un champ magnétique perpendiculaire à l'axe de tube de mesure ;
Au moins une paire d'électrodes de mesure (30, 31, 32) destinée à prélever une tension électrique de mesure induite par le champ magnétique ;
Un circuit électronique de mesure/d'exploitation (77.7), lequel est conçu pour exploiter le système magnétique (20) et les électrodes de mesure (31, 32), ainsi qu'à mettre en oeuvre le procédé selon l'une des revendications précédentes.

14. Débitmètre électromagnétique selon la revendication 13,
pour lequel le système magnétique (20) présente au moins un système de bobines (21) avec au moins une bobine (21.1), le système magnétique présentant notamment au moins un aimant rémanent (22) ou notamment au moins un aimant permanent (23).

15. Débitmètre électromagnétique selon la revendication 13 ou 14,
pour lequel le débitmètre comporte une électrode de masse (ME).
